Europäisches Patentamt

European Patent Office

Office européen des brevets

(11) Veröffentlichungsnummer : **0 198 375**
**B1**

(12) # EUROPÄISCHE PATENTSCHRIFT

(45) Veröffentlichungstag der Patentschrift :
23.11.89

(51) Int. Cl.⁴ : **C 08 J 3/20**, **C 08 J 3/12**,
**C 08 L 27/18**, **C 08 K 3/08**

(21) Anmeldenummer : 86104688.6

(22) Anmeldetag : 05.04.86

(54) Verfahren zur Herstellung eines agglomerierten Formpulvers aus Polytetrafluorethylen und metallischen Füllstoffen.

(30) Priorität : 13.04.85 DE 3513262

(43) Veröffentlichungstag der Anmeldung :
22.10.86 Patentblatt 86/43

(45) Bekanntmachung des Hinweises auf die Patenterteilung : 23.11.89 Patentblatt 89/47

(84) Benannte Vertragsstaaten :
DE FR GB IT NL

(56) Entgegenhaltungen :
US–A– 3 980 596
US–A– 4 370 436
Die Akte enthält technische Angaben, die nach dem Eingang der Anmeldung eingereicht wurden und die nicht in dieser Patentschrift enthalten sind.

(73) Patentinhaber : HOECHST AKTIENGESELLSCHAFT
Postfach 80 03 20
D-6230 Frankfurt am Main 80 (DE)

(72) Erfinder : Eberl, Karl, Dr.
Ortlehnerstrasse 52
D-8269 Burgkirchen/Alz (DE)

**Beschreibung**

Die Erfindung betrifft ein Verfahren zur Herstellung eines agglomerierten Formpulvers, bestehend aus Agglomeraten eines aus der Schmelze nicht verarbeitbaren Tetrafluorethylen-Polymeren mit mindestens einem feinzerteilten metallischen Füllstoff aus der Gruppe des Kupfers und des Zinns und deren Legierungen miteinander oder mit anderen Metallen, wobei der Füllstoff in den agglomerierten Teilchen in gleichmäßiger Verteilung enthalten ist, durch Vormischen, Suspendieren und Rühren unter Agglomeration eines feinzerteilten, granularen Tetrafluorethylen-Polymerpulvers und des Füllstoffs, der keiner Oberflächenbehandlung mit einer Aminosilanverbindung unterzogen wurde, in einem flüssigen Medium aus Wasser und einer das Tetrafluorethylen-Polymerpulver benetzenden, in Wasser höchstens bis zu 15 Gew.-% löslichen organischen Flüssigkeit in Gegenwart eines hydrophobierenden Mittels.

Feinzerteilte granulare, das heißt nach dem Verfahren der Suspensionspolymerisation erzeugte und dann gemahlene Polytetrafluorethylen (PTFE)-Pulver besitzen ein niedriges Schüttgewicht und eine schlechte Fließfähigkeit. Um diesem Mangel abzuhelfen, werden seit langem solche Pulver einer Agglomerierung durch Bewegen in einem flüssigen Medium, das aus Wasser und einer mit Wasser nicht mischbaren, die Pulverteilchen benetzenden organischen Flüssigkeit besteht, unterzogen. Auch Füllstoffteilchen werden zusammen mit den Teilchen des granularen PTFE-Pulvers in dieser Weise agglomeriert, jedoch geht bei diesem Prozeß ein beträchtlicher Anteil des Füllstoffs verloren, besonders wenn es sich um einen hydrophilen Füllstoff handelt. Dieser Anteil, der aus dem Agglomeriermedium ausfällt, kann nur unvollständig mit erheblichem Aufwand aus der flüssigen Phase zurückgewonnen werden.

Es ist bekannt, zur wäßrigen Phase während des Agglomerationsvorgangs bestimmte Mittel hinzuzusetzen, die die Entmischung des hydrophilen Füllstoffs verhindern sollen. Als solche Mittel sind bereits bekannt geworden aus der US-PS 3 980 596 längerkettige Carbonsäuren oder deren Salze und aus der US-PS 3 929 721 Organosilane oder wasserlösliche Siliconharze. Es ist ferner bekannt, hydrophile Füllstoffe, wie Bronze oder andere Metallpulver, vor der gemeinsamen Agglomerierung mit PTFE zunächst in einem gesonderten Arbeitsgang mit solchen Mitteln zu beschichten und dann den so vorbehandelten Füllstoff in trockenem Zustand mit PTFE zu mischen und diese Mischung einem Agglomerationsprozeß zuzuführen (vgl. zum Beispiel US-PS 3 766 133, Beispiel 17).

Während die letztgenannte Vorbehandlung des Füllstoffs einen arbeitsaufwendigen zusätzlichen Verfahrensschritt darstellt, der eine teilweise Entmischung des Füllstoffs und damit Füllstoffverluste nicht verhindern kann, werden beim Zusatz von längerkettigen Carbonsäuren und auch beim Zusatz von Organosilanen oder Siliconen zur flüssigen Agglomerierungsphase an Formkörpern, die aus den so gewonnenen füllstoffhaltigen Agglomeraten hergestellt wurden, farbliche Inhomogenitäten in Form von punktförmigen Verfärbungen oder von Zonen verschiedener Farben beobachtet. Ein Verlust an teurem Füllstoff ist auch bei diesen Verfahren unvermeidlich.

In der US-A-4 370 436 ist ein Verfahren zur Herstellung eines agglomerierten Formpulvers aus PTFE und Füllstoffen durch Agglomerieren in einem flüssigen Medium aus Wasser und einer organischen Flüssigkeit beschrieben. Dabei können auch höhere Fettsäuren und/oder anionische Netzmittel zugegen sein, wobei unter den letzten, neben einer Reihe anderer Vertreter, auch Alkylsulfate und Alkansulfonate genannt sind. Das beschriebene Verfahren ist anwendbar auf alle hydrophilen Füllstoffe, jedoch ausdrücklich nur auf solche, die einer Oberflächen-Vorbehandlung mit einer Aminosilan-Verbindung unterzogen worden sind.

Es bestand daher die Aufgabe, ein Verfahren zur gemeinsamen Agglomeration von PTFE und den genannten metallischen Füllstoffen zu entwickeln, das die beschriebenen Nachteile nicht aufweist.

Diese Aufgabe wird in einem Verfahren der eingangs genannten Art erfindungsgemäß dadurch gelöst, daß im flüssigen Medium während des Agglomeriervorgangs ein Alkansulfonat oder ein Alkylsulfat mit einem Alkan- oder Alkylrest mit 10 bis 18 C-Atomen zugegen ist.

Die Alkylsulfate R—O—SO$_3$M können kettenreine Produkte oder Gemische solcher kettenreiner Produkte mit einem Rest R sein, der einen Alkylrest von 10 bis 18 C-Atomen darstellt, wobei R selbst eine verzweigte C-Kette sein kann, das Sulfat aber von einem primären Fettalkohol abgeleitet ist, oder das Sulfat kann von einem sekundären oder tertiären Alkohol abgeleitet sein, dessen Ketten wiederum in sich verzweigt sein können. Bevorzugt sind die Dodecylsulfate (Laurylsulfate). Die Alkylsulfate können aber auch Kettenschnitte mit einem überwiegenden Anteil von Ketten im Bereich von 10 bis 18 C-Atomen sein. Ebenso kann der Alkanrest R des Alkansulfonats R—SO$_3$M die —SO$_3$M-Gruppe entweder in endständiger Stellung oder an jeder beliebigen Stelle der Kette tragen, wobei auch diese Kette in sich verzweigt sein kann. Alkansulfonate sind von ihrer Herstellung her meist Gemische mit verschiedenen Resten R hinsichtlich ihrer Länge und/oder ihres Verzweigungsgrades, jedoch können selbstverständlich auch kettenreine Mittel zum Einsatz gelangen. Im Fall von Gemischen soll auch hier der überwiegende Teil (etwa größer als 80 Prozent) der Alkylreste 10 bis 18 C-Atome haben. Auch Anteile von Di- und Trisulfonaten sind möglich. M ist ein Alkalimetall-, Erdalkalimetall-, ein NH$_4$- oder ein N(R$^1$)$_4$-Kation, wobei mindestens einer der Reste R$^1$ ein kurzkettiger, gegebenenfalls OH-substituierter Alkylrest ist und die übrigen Reste R$^1$ H-Atome sein können. Vorzugsweise ist M ein Alkalimetall oder Magnesium, insbesondere ist M Natrium. Auch Gemische der genannten Alkansulfonate sind einsetzbar.

Diese Alkylsulfate oder Alkansulfonate oder deren Gemische sollen in einem Anteil von 2 bis 1 000 ppm, vorzugsweise von 10 bis 200 ppm, bezogen auf die Gewichtsmenge der Mischung PTFE plus Füllstoff, im flüssigen Medium während des Agglomeriervorgangs zugegen sein.

Die eingesetzten Füllstoffe sind feinzerteilte Metallpulver des Kupfers oder des Zinns oder der Legierungen dieser Metalle untereinander oder mit anderen Metallen, wobei solche Legierungen mindestens einen der beiden Bestandteile enthalten und dieser Bestandteil mindestens 20 Gew.-% Kupfer oder mindestens 5 Gew.-% Zinn ausmacht. Ferner sollen solche Legierungen einen Schmelzpunkt besitzen, der oberhalb der Sintertemperatur des PTFE von 327 °C, vorzugsweise oberhalb von 350 °C, liegt. Als derartige Legierungen kommen beispielsweise in Betracht : die verschiedenen Messinglegierungen, die neben Kupfer und Zink andere einlegierte Bestandteile wie Blei, Zinn, Nickel oder Mangan enthalten ; die Kupfer-Nickel-Legierungen oder die als Neusilber bekannten Kupfer-Nickel-Zink-Legierungen ; vorzugsweise aber die Legierungen von Kupfer und Zinn (Zinnbronzen), die meist unter der allgemeinen Bezeichnung « Bronze » verstanden werden und die gegebenenfalls auch andere Legierungsbestandteile in untergeordnetem Maße enthalten, wie beispielsweise Zink oder Blei. Neben diesen genannten Bestandteilen können solche Legierungen, die für die Zwecke der Erfindung brauchbar sind, in untergeordnetem Maße auch noch weitere, oben nicht genannte metallische oder auch nichtmetallische Legierungsbestandteile enthalten (wie beispielsweise Phosphor). Die Mischungen dieser metallischen Füllstoffe mit PTFE, die insbesondere als Werkstoffe für abriebbeständige Gleitlager dienen, enthalten 1 bis 75 Gew.-%, vorzugsweise 20 bis 60 Gew.-% des Füllstoffs. Die Teilchengröße $d_{50}$ der metallischen Füllstoffe liegt zweckmäßigerweise bei 5 bis 100, bevorzugt bei 10 bis 30 $\mu$m. Die genannten metallischen Füllstoffe können, wenn für bestimmte Anwendungszwecke dienlich, auch miteinander vermischt werden.

Das erfindungsgemäße Verfahren bezieht sich auf die Agglomerierung von aus der Schmelze nicht verarbeitbaren Tetrafluorethylen-Polymeren. Unter diesem Begriff versteht man in erster Linie das Homopolymere, nämlich das Polytetrafluorethylen selbst, daneben aber auch die sogenannten « modifizierten » Tetrafluorethylen-Polymeren, das heißt solche Polymerisate des Tetrafluorethylens, die ein fluoriertes oder bevorzugt perfluoriertes Comonomeres in einer so geringen Menge — meist 2 Mol-% — enthalten, so daß der Charakter des Polymeren als « aus der Schmelze nicht verarbeitbar » nicht entscheidend verändert wird. Solche Comonomere sind beispielsweise Chlortrifluorethylen, Hexafluorisobutylen, 1-Perfluorbuten, insbesondere aber Perfluoralkylperfluorvinylether mit einem Perfluoralkylrest von 1 bis 5 C-Atomen und Hexafluorpropylen. Soweit in dieser Beschreibung die Abkürzung PTFE gebraucht wird, bezieht sie sich auf alle diese Arten des Polytetrafluorethylens. Für den Agglomerationsprozeß zu einem PTFE-Formpulver von hohem Schüttgewicht und guter Fließfähigkeit werden Suspensionspolymerisate des Tetrafluorethylens eingesetzt, wobei das nach diesem Verfahren erhaltene PTFE, das als Rohpolymerisat eine mittlere Teilchengröße von 800 $\mu$m und höher besitzt, einem der bekannten Zerkleinerungsprozesse für PTFE unterworfen — beispielsweise Mahlen in einer Hammermühle oder Naßschneiden — und dabei auf eine mittlere Teilchengröße von $\leqslant 200$ $\mu$m feinzerteilt wird. Desgleichen sollen die eingesetzten Füllstoffe in feinzerteilter Form vorliegen, das heißt eine mittlere Teilchengröße besitzen wie oben angegeben. Das Agglomerationsverfahren selbst ist dem Fachmann bekannt, beispielsweise aus den US-Patentschriften 3 527 857 und 3 781 258. In diesen Verfahren wird das mit den Füllstoffen vorgemischte PTFE-Pulver in einem flüssigen Medium suspendiert, das aus Wasser und einer organischen Flüssigkeit besteht, wobei diese organische Flüssigkeit imstande sein muß, das PTFE-Pulver zu benetzen und außerdem in Wasser bis zu 15 Gew.-%, vorzugsweise bis zu 3 Gew.-%, löslich sein darf. Solche organischen Flüssigkeiten sind beispielsweise Kohlenwasserstoffe oder deren Gemische, zum Beispiel n-Heptan, n-Octan, Benzinfraktionen, insbesondere solche mit Siedepunkten von 80 bis 150 °C, Cyclohexan, Benzol, Toluol ; halogenierte Kohlenwasserstoffe, beispielsweise Perchlorethylen, Chloroform, Trichlorethylen, Tetrachlorkohlenstoff oder Chlorfluorkohlenwasserstoffe wie 1,1,2-Trifluor-1,2,2-trichlorethan. Das Verhältnis von Wasser zu Feststoff, das heißt der Summe von PTFE-Pulver und Füllstoff, soll im Bereich von 3 : 1 bis 1 : 3, das Verhältnis von Feststoff zu organischer Flüssigkeit im Bereich von 1 : 1 bis 10 : 1 Gewichtsteilen liegen. Der Gewichtsanteil des Füllstoffs in dem Gemisch mit PTFE liegt im Bereich von 1 bis 75, vorzugsweise von 20 bis 60 Gew.-%. Das suspendierte Gemisch aus PTFE und Füllstoff wird dann zur Agglomerierung längere Zeit gerührt, die Mischung kann dabei auf Raumtemperatur gehalten oder auch auf Temperaturen, die unter oder am Siedepunkt der eingesetzten organischen Flüssigkeit liegen, erwärmt werden ; vorzugsweise wird bei 40 bis 50 °C gearbeitet. Die Rührenergie, die Zeitdauer und Temperatur bestimmen den Grad der Agglomeration, der durch geeignete Wahl dieser Größen eingestellt werden kann. Nach Beendigung des Agglomerierungsvorganges wird das erhaltene Pulver in geeigneter Weise von der organischen Flüssigkeit abgetrennt, in Wasser gewaschen, getrocknet und gegebenenfalls von Agglomeraten mit übergroßer oder zu kleiner Teilchengröße durch Sieben getrennt.

Durch das erfindungsgemäße Verfahren gelingt es, die beim Einsatz bekannter Mittel auftretenden Verfärbungen praktisch völlig zu beseitigen, so daß die aus solchen agglomerierten Massen hergestellten Formkörper auch nach dem Sintervorgang ein farblich homogenes Aussehen haben. Ferner werden Füllstoffverluste, die während des Agglomerationsvorganges durch Entmischung und Ausfallen des Füllstoffs eintreten, nahezu vollständig beseitigt, so daß die aus der Menge des eingesetzten PTFE-Pulvers und des eingesetzten metallischen Füllstoffs errechneten Dichten auch in etwa im agglomerierten Pulver erreicht werden. Auch weisen die so erzeugten agglomerierten Formpulver offenbar eine homogenere Verteilung des Füllstoffs im agglomerierten Korn auf, was sich bei daraus hergestellten Formkörpern in einer wesentlich verbesserten Festigkeit und Reißdehnung manifestiert.

Die erfindungsgemäß hergestellten agglomerierten und mit Füllstoffen des genannten Typs versehenen Formpulver finden Anwendung als Materialien für Gleitlager, und zwar in Form von Folien oder von Formkörpern.

Die folgenden Beispiele sollen die Erfindung erläutern :

## Beispiele 1 bis 9

800 g eines durch Suspensionspolymerisation erzeugten und feingemahlenen Polytetrafluorethylen-Pulvers mit einem mittleren Teilchendurchmesser $d_{50}$ von 25 $\mu$m werden mit 1,5 kg einer Zinnbronze (Zusammensetzung 90 Gew.-% Kupfer, 10 Gew.-% Zinn) mit einem mittleren Teilchendurchmesser $d_{50}$ von 20 $\mu$m in einem Fluid-Mischer innig vermischt. Dieses Gemisch wird unter Rühren in ein Agglomerationsgefäß von 10 l Inhalt (Höhe 35 cm, Durchmesser 20 cm) eingetragen, in dem sich bereits eine Lösung des jeweils verwendeten Hydrophobiermittels (Menge und Art siehe untenstehende Tabelle I) befindet. Nach Spülen des Gasraumes mit Stickstoff werden unter Rühren 0,4 l einer Benzinfraktion mit einem Siedebereich von 80 bis 110 °C hinzugefügt und die Mischung mit einem ®Ultra-Turrax 2 Minuten lang homogenisiert und dann mit einem vierflügeligen Propellerrührer mit 10 cm Durchmesser bei 750 UpM 30 Minuten lang weitergerührt. Danach wird das Agglomerat abfiltriert und 12 h bei 250 °C getrocknet. In der folgenden Tabelle I sind neben der Art und der Menge des Hydrophobiermittels auch die mechanischen Eigenschaften von aus solchen agglomerierten füllstoffhaltigen Formpulvern angegeben (gemessen nach ASTM 638-67 ; Prüfkörper hergestellt nach ASTM 1708-66). Die durch Mischen der oben angegebenen Menge PTFE-Pulver mit der angegebenen Menge Zinnbronze erreichte Dichte beträgt 3,96 g/cm³. Die Abnahme der Dichte ist ein Maß für den bei Agglomeration eingetretenen Verlust an Füllstoff. Die Beispiele A bis C sind Vergleichsversuche, und zwar A mit einem Hydrophobiermittel gemäß der US-PS 3 929 721, B und C mit einem Hydrophobiermittel gemäß der US-PS 3 980 596.

(Siehe Tabelle 1 Seite 5 f.)

EP 0 198 375 B1

Tabelle 1

| Beispiel Nr. | Hydrophobiermittel | Konzen-tration (ppm) | Zug-festigkeit $(N/mm^2)$ | Reiß-dehnung (%) | Dichte $(g/cm^3)$ | Aussehen einer aus dem erhaltenen Formpulver gepreßten Folie |
|---|---|---|---|---|---|---|
| 1 | $C_{12}H_{25} - O - SO_3Na$ | 100 | 17,4 | 260 | 3,90 | homogen |
| 2 | $C_{12}H_{25} - O - SO_3Na$ | 200 | 21,9 | 150 | 3,92 | homogen |
| 3 | $C_{12}H_{25} - O - SO_3Na$ | 500 | 21,5 | 150 | 3,93 | homogen |
| 4 | Alkansulfonate [+] | 10 | 17,0 | 270 | 3,94 | homogen |
| 5 | Alkansulfonate [+] | 50 | 16,3 | 275 | 3,94 | homogen |
| 6 | Alkansulfonate [+] | 100 | 16,2 | 175 | 3,94 | homogen |
| 7 | Alkansulfonate [+] | 200 | 15,9 | 155 | 3,94 | homogen |
| 8 | Alkansulfonate [++] | 100 | 17,7 | 210 | 3,95 | homogen |
| 9 | n-Hexadecansulfonat, Na-Salz | 100 | 17,8 | 230 | 3,94 | homogen |
| A | Methylphensiloxan | 100 | 18,7 | 165 | 3,87 | dunkle Punkte |
| B | $C_{11}H_{23}COOH$ | 100 | 21,5 | 170 | 3,89 | dunkle Punkte, marmoriert |
| C | $C_{11}H_{23}COOH$ | 250 | 17,3 | 150 | 3,88 | dunkle Punkte, marmoriert |

[+] Natriumsalze eines Gemisches sekundärer Alkansulfonsäuren, wobei 80 Gew.-% der Alkansulfonsäuren 14 bis 16 C-Atome aufweisen und das Gemisch etwa 20 Gew.-% Alkandisulfonsäuren enthält (Handelsprodukt ®K 30 der Fa. Bayer AG)

[++] Natriumsalze eines Gemisches sekundärer Alkansulfonsäuren, wobei 85 Gew.-% der Alkansulfonsäuren 13 bis 17 C-Atome aufweisen und das Gemisch etwa 10 Gew.-% Alkandisulfonsäuren enthält (Handelsprodukt ®Hostapur SAS der Fa. Hoechst AG)

# EP 0 198 375 B1

## Patentansprüche

1. Verfahren zur Herstellung eines agglomerierten Formpulvers, bestehend aus Agglomeraten eines aus der Schmelze nicht verarbeitbaren Tetrafluorethylenpolymeren mit mindestens einem feinzerteilten metallischen Füllstoff aus der Gruppe des Kupfers und Zinns und deren Legierungen miteinander oder mit anderen Metallen, wobei der Füllstoff in den agglomerierten Teilchen in gleichmäßiger Verteilung enthalten ist, durch Vormischen, Suspendieren und Rühren unter Agglomeration eines feinzerteilten, granularen Tetrafluorethylen-Polymerpulvers und des Füllstoffs, der keiner Oberflächenbehandlung mit einer Aminosilanverbindung unterzogen wurde, in einem flüssigen Medium aus Wasser und einer das Tetrafluorethylen-Polymerpulver benetzenden, in Wasser höchstens bis zu 15 Gew.-% löslichen organischen Flüssigkeit in Gegenwart eines hydrophobierenden Mittels, dadurch gekennzeichnet, daß im flüssigen Medium während des Agglomerationsvorgangs ein Alkansulfonat oder ein Alkylsulfat mit einem Alkan- oder Alkylrest mit 10 bis 18 C-Atomen zugegen ist.

2. Verfahren nach Anspruch 1, dadurch gekennzeichnet, daß als Alkylsulfat das Natriumlaurylsulfat eingesetzt wird.

## Claims

1. A process for the preparation of an agglomerated molding powder composed of agglomerates of a non-melt-fabricable tetrafluoroethylene polymer together with at least one finely divided metallic filler belonging to the group comprising copper and tin and alloys thereof with one another or with other metals, the filler being present in a uniformly divided state in the agglomerated particles, by premixing, suspending and stirring, with agglomeration, a finely divided, granular tetrafluoroethylene polymer powder and the filler, which had not been surface-treated with an aminosilane compound, in a liquid medium composed of water and an organic liquid which wets the tetrafluoroethylene polymer powder and is soluble in water to the extent of not more than 15 % by weight, in the presence of a hydrophobising agent, characterised in that an alkanesulfonate or an alkylsulfate containing an alkane or alkyl radical having 10 to 18 carbon atoms being present in the liquid medium during the agglomeration process.

2. The process according to claim 1, wherein sodium laurylsulfate is employed as the alkylsulfate.

## Revendications

1. Procédé pour préparer une poudre agglomérée à mouler, consistant en des agglomérats d'un polymère de tétrafluoréthylène non usinable ou transformable à l'état fondu, avec au moins une charge métallique finement répartie, choisie dans l'ensemble constitué par le cuivre et l'étain et leurs alliages l'un avec l'autre ou avec d'autres métaux, la charge étant contenue en répartition homogène dans les particules agglomérées, par prémélangeage, mise en suspension et agitation avec agglomération d'une poudre de polymère granulaire, en fines particules, de tétrafluoréthylène et de la charge, qui n'a été soumise à aucun traitement de surface par un composé de type aminosilane, dans un milieu liquide constitué d'eau et d'un liquide organique capable de mouiller la poudre de polymère de tétrafluoréthylène et qui est soluble dans l'eau en une proportion pouvant aller jusqu'à 15 % en poids au maximum, en opérant en présence d'un produit rendant hydrophobe, procédé caractérisé en ce qu'on ajoute au milieu liquide, pendant le processus d'agglomération, un alcanesulfonate ou un alkylsulfate comportant un reste alcane ou alkyle ayant 10 à 18 atomes de carbone.

2. Procédé selon la revendication 1, caractérisé en ce qu'on utilise comme alkylsulfate le dodécylsulfate ou laurylsulfate de sodium.